# FASCICULE DE BREVET EUROPEEN

(11) **EP 1 949 348 B1**
(45) Date de publication et mention de la délivrance du brevet: **15.08.2012**
(21) Numéro de dépôt: 06809052.1
(22) Date de dépôt: 18.10.2006
(51) Int. Cl.: G08C 19/16, H02P 27/00, E06B 9/00, G05B 11/01

(54) **PROCEDE DE COMMANDE D'UN ACTIONNEUR DE VOLET ROULANT**
VERFAHREN ZUR STEUERUNG EINES ROLLADEN-STELLGLIEDES
METHOD FOR CONTROLLING A ROLLER-BLIND ACTUATOR

(30) Priorité: 19.10.2005 FR 0510646; 13.03.2006 FR 0602169
(43) Date de publication de la demande: 30.07.2008
(73) Titulaire: Somfy SAS, 74300 Cluses (FR)
(72) Inventeur: GREHANT, Bernard, F-74300 Nancy-sur-Cluses (FR)
(74) Mandataire: Bugnion Genève
(86) Numéro de dépôt international: PCT/IB2006/002908
(87) Numéro de publication internationale: WO 2007/045967

(56) Documents cités:
- EP-A- 0 038 877
- WO-A-2004/025867
- WO-A-2005/031963
- FR-A- 2 550 356

## Description

L'invention concerne un procédé de commande d'un actionneur défini selon le préambule de la revendication 1. Elle concerne encore un procédé de mise en forme d'une tension alternative, un actionneur de manoeuvre d'un équipement mobile d'un bâtiment dans un premier sens et dans un deuxième sens, comprenant une unité de pilotage d'un moteur et un moteur et des installations pour la mise en oeuvre des procédés.

Des moteurs asynchrones monophasés sont couramment intégrés dans les actionneurs utilisés pour des applications de confort et/ou de sécurité dans un bâtiment, comme par exemple l'entraînement de stores, de volets roulants, de volets de ventilation ou de fermetures.

La demande de brevet WO2004/025867 décrit plus particulièrement un procédé concernant des actionneurs susceptibles d'entraîner un élément mobile dans deux sens de rotation et comprenant deux bornes d'alimentation. Une commande de mouvement dans un premier sens (par exemple la montée) est transmise par coupure des alternances négatives tandis qu'une commande de mouvement dans une seconde direction est transmise par coupure des alternances négatives. Une commande d'arrêt est obtenue par coupure complète de la tension d'alimentation pendant une durée comprise dans un intervalle de temps déterminé.

Ce procédé et les moyens présentés pour sa mise en oeuvre comportent plusieurs inconvénients. La mise en oeuvre nécessite des interrupteurs spéciaux pour la génération d'une commande d'arrêt. L'interrupteur spécial comporte un troisième contact, par exemple normalement fermé, ou comporte un moyen mécanique permettant l'appui simultané sur les deux contacts de commande de mouvement. De plus, lors de la transmission d'un ordre de commande de mouvement, si l'utilisateur maintient son action sur le contact, le moteur est d'abord alimenté sous tension efficace réduite et risque par conséquent de ne pas présenter un couple suffisant pour permettre le démarrage du moteur. Ensuite, l'alimentation permanente de l'actionneur ne prend pas en compte les besoins d'économie d'énergie. En outre, l'installation utilisant le procédé n'est pas sécurisée contre une tentative d'intrusion extérieure ou contre les parasites pouvant survenir sur la ligne d'alimentation. Enfin, dans la mesure où il est nécessaire que l'électronique en aval de l'interrupteur soit toujours alimentée, un ordre d'arrêt de mouvement consistant en une ouverture de la ligne ne peut être transmis que pendant une durée très réduite. En cas de défaillance passagère des moyens de réception, il est possible que cet ordre d'arrêt ne soit pas reçu. Ceci pose un grave problème de sécurité.

Un autre inconvénient majeur de l'art antérieur est qu'il impose de dimensionner les diodes contenues dans les interrupteurs spéciaux en fonction de l'intensité du courant absorbé par le moteur. En particulier la mise en parallèle de plusieurs moteurs alimentés par un même interrupteur est quasiment impossible sauf à surdimensionner lesdites diodes. Dans le cas d'un interrupteur de commande générale, placé en amont de l'installation, l'intensité nominale des diodes devient considérable : en effet, un moteur utilisé dans les applications citées absorbe un courant typique de 1A, ce qui correspond à une diode standard 1 N4007 à très faible coût, alors qu'une installation de 20 moteurs nécessitera des diodes 20A encombrantes et coûteuses.

Le but de l'invention est de fournir un procédé de commande et des moyens remédiant à ces inconvénients et améliorant les procédés de commande et les moyens connus de l'art antérieur. En particulier, le procédé de commande permet de commander un actionneur grâce à deux boutons de commande, d'assurer que le moteur est alimenté sous tension nominale dès le début de l'exécution d'une commande de mouvement, de limiter la consommation d'énergie électrique et de sécuriser l'actionneur contre une tentative d'intrusion extérieure ou contre les parasites pouvant survenir sur la ligne d'alimentation et d'émettre un signal de commande d'arrêt redondant.

Le procédé de commande selon l'invention est caractérisé par la partie caractérisante de la revendication 1.

Différents modes d'exécution du procédé de commande selon l'invention sont définis par les revendications 2 à 7.

L'actionneur selon l'invention est défini par la revendication 8.

Une première installation selon l'invention est définie par la revendication 9.

Différents modes de réalisation de cette installation sont définis par les revendications 10 à 12.

Le procédé de mise en forme d'une tension alternative selon l'invention est défini par la revendication 13.

Une unité de surveillance de tension et de mise en forme de tension selon l'invention est définie par la revendication 14.

Une variante d'une telle unité de surveillance de tension et de mise en forme de tension est définie par la revendication 15.

Une deuxième installation selon l'invention est définie par la revendication 16.

Le dessin annexé représente, à titre d'exemples, un mode d'exécution du procédé de commande selon l'invention, un mode d'exécution du procédé de mise en forme selon l'invention et un mode de réalisation d'un actionneur et d'une installation selon l'invention.
La figure 1 est un schéma d'un mode de réalisation d'une installation selon l'invention.
La figure 2 est un ordinogramme d'un mode d'exécution d'un procédé de commande selon l'invention.
La figure 3 est un schéma d'une installation munie d'un module de surveillance et de mise en forme de tension alternative.
La figure 4 est un schéma d'un mode de réalisation d'un module de surveillance et de mise en forme de tension alternative.
La figure 5 est un ordinogramme d'un mode d'exécution d'un procédé de surveillance et de mise en forme de tension alternative.

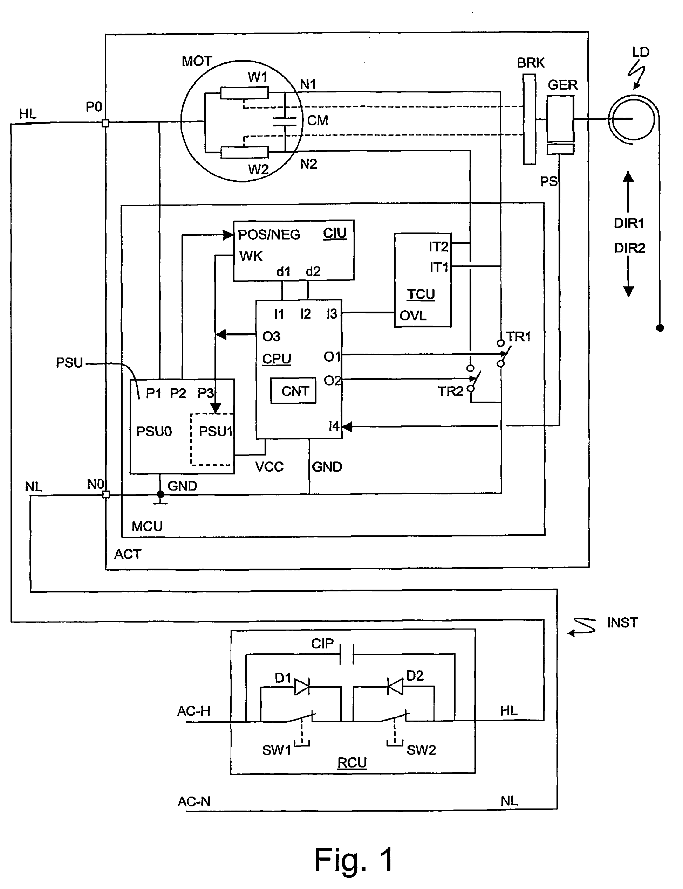

L'installation INST décrite à la figure 1 permet la manoeuvre d'une charge LD selon un premier sens de mouvement DIR1 et selon un deuxième sens de mouvement DIR2. L'installation comprend un actionneur ACT entraînant la charge et une unité RCU de commande à distance de cet actionneur, l'actionneur étant alimenté par le réseau électrique au travers de l'unité de commande à distance.

Le réseau d'alimentation électrique de l'installation est raccordé à une connexion de phase AC-H issue du tableau de distribution électrique du bâtiment et à une connexion de neutre AC-N également issue de ce tableau. Une liaison directe NL est réalisée entre la connexion de neutre AC-N et une borne de neutre N0 de l'actionneur. La liaison entre la connexion de phase AC-H et la borne de phase P0 de l'actionneur est réalisée par l'intermédiaire de l'unité de commande à distance RCU, dont une entrée est raccordée à la connexion de phase tandis qu'une sortie est raccordée à l'actionneur par une liaison de phase HL.

L'unité de commande à distance RCU comprend un premier interrupteur normalement fermé SW1 en série avec un deuxième interrupteur normalement fermé SW2. Une première diode D1 et une seconde diode D2 sont disposées respectivement en parallèle sur chacun des interrupteurs, les cathodes étant reliées au point commun des interrupteurs. Une impulsion sur le bouton poussoir activant le premier interrupteur SW1 provoque donc la disparition des alternances négatives, tandis qu'une impulsion sur le bouton poussoir activant le deuxième interrupteur SW2 provoque la disparition des alternances positives.

L'actionneur ACT comprend un moteur MOT de type à induction, monophasé, à condensateur permanent. Le moteur MOT comprend un premier enroulement W1 et un deuxième enroulement W2. Les deux enroulements présentent un point commun raccordé à la borne de phase P0. Les extrémités non communes des enroulements sont respectivement désignées par N1 et N2. Un condensateur permanent CM est disposé entre ces extrémités. Lorsque la première extrémité N1 est raccordée à la borne de neutre N0, alors le moteur tourne dans un premier sens. Lorsque la deuxième extrémité N2 est raccordée à la borne de neutre N0, alors le moteur tourne dans un deuxième sens. L'arbre de sortie du moteur est raccordé à un frein d'immobilisation BRK, du type à manque de courant : la rotation est bloquée si les bobinages ne sont pas alimentés. Un réducteur GER permet de réduire la fréquence de rotation tout en augmentant le couple. L'arbre de sortie du réducteur entraîne la charge dans un premier sens DIR1 si le moteur tourne dans le premier sens et dans un deuxième sens DIR2 si le moteur tourne dans le deuxième sens.

L'actionneur comprend une unité de pilotage du moteur MCU comportant deux interrupteurs commandés. Un premier interrupteur commandé TR1 est relié à la première extrémité N1 de l'enroulement W1 du moteur et à la borne de neutre N0. Un deuxième interrupteur commandé TR2 est relié à la deuxième extrémité N2 de l'enroulement W2 et à la borne de neutre N0. La fermeture de l'un ou l'autre des interrupteurs commandés permet donc l'alimentation du moteur. Les interrupteurs commandés sont des triacs, permettant également une liaison synchronisée sur la tension secteur et une commande à angle de phase. Alternativement, les interrupteurs commandés peuvent être des contacts de relais. D'autres types d'interrupteurs à semiconducteurs de type MOS ou GTO sont également utilisables.

L'unité de pilotage du moteur comprend également une unité logique de traitement CPU, dont deux entrées logiques I1 et I2 reçoivent les ordres de mouvement dans le premier ou le deuxième sens. Une troisième entrée logique I3 de l'unité logique de traitement est raccordée à une sortie logique OVL d'une unité de contrôle du couple TCU. L'unité de contrôle de couple présente une première entrée IT1 raccordée à la première extrémité N1 et une seconde entrée raccordée à la deuxième extrémité N2. Cette unité a donc accès à la tension aux bornes du condensateur permanent CM. Cette tension est représentative de la vitesse du rotor, elle-même dépendant du couple. Alternativement, l'unité de contrôle de couple TCU peut également présenter une liaison avec la borne de neutre N0. Le couple est alors déduit des tensions référencées par rapport au neutre.

L'unité logique de traitement comprend aussi une première sortie logique O1 raccordée à la borne de commande du premier interrupteur commandé TR1 et une deuxième sortie logique 02 raccordée de même au deuxième interrupteur commandé TR2.

Quand l'unité de contrôle du couple détecte que le couple dépasse un seuil prédéterminé, et/ou que la variation de couple dépasse un seuil prédéterminé, alors la sortie logique OVL devient active. L'information reçue sur l'entrée logique I3 permet à l'unité logique de traitement CPU de commander l'ouverture des interrupteurs commandés.

Une quatrième entrée logique I4 de l'unité logique de traitement est raccordée à la sortie PS d'un capteur de position. Ce capteur est disposé sur l'arbre de sortie du moteur, ou encore sur un des composants du réducteur. Les impulsions transmises par le capteur de position permettent l'incrémentation ou la décrémentation d'un compteur CNT de l'unité logique de traitement.

L'unité de pilotage du moteur comprend une unité d'alimentation PSU présentant une première borne d'entrée P1 raccordée à la borne de phase P0 et une seconde borne d'entrée GND raccordée à la borne de neutre N0. Cette borne sert de masse électrique aux circuits contenus dans l'unité de pilotage du moteur MCU. L'unité d'alimentation comprend des circuits redresseurs et abaisseurs non représentés car connus de l'homme du métier. L'unité d'alimentation PSU comprend également une sortie positive VCC raccordée à la borne d'alimentation de l'unité logique de traitement CPU. La tension délivrée entre cette sortie positive et la masse GND vaut par exemple 5 volts. Cependant, une tension n'apparaît pas systématiquement sur la sortie positive VCC dès lors que l'actionneur est sous tension.

En effet, l'unité de pilotage du moteur comprend également une unité d'interprétation de commandes CIU dont une sortie logique de réveil WK est raccordée à une troisième borne d'entrée P3 de l'unité d'alimentation.

L'unité d'alimentation PSU est en fait organisée en deux sous-ensembles. Un premier sous-ensemble PSU0 comprend en particulier un pont redresseur à diodes, équipé de capteurs de courant. Les capteurs de courant permettent de différencier une alternance positive et une alternance négative de la tension appliquée à l'actionneur. Le sous-ensemble comprend une sortie d'information d'alternance P2 raccordée à une entrée d'information d'alternance POS/NEG de l'unité d'interprétation de commandes CIU. Cette dernière présente une première sortie logique de mouvement d1, et une deuxième sortie logique de mouvement d2. Ces deux sorties sont respectivement raccordées aux entrées logiques I1 et I2 de l'unité logique de traitement CPU. Le premier sous-ensemble PSU0 est destiné à alimenter uniquement l'unité d'interprétation de commandes CIU.

Le fonctionnement de cette unité d'interprétation est le suivant :
- si une alternance positive est intercalée entre deux alternances négatives ou si une alternance négative est intercalée entre deux alternances positives, alors les sorties logiques de mouvement ne sont pas modifiées,
- si une alternance positive manque entre deux alternances négatives, alors la sortie logique de réveil WK est activée puis la première sortie logique de mouvement d1 est activée,
- si une alternance négative manque entre deux alternances positives, alors la sortie logique de réveil WK est activée puis la deuxième sortie logique de mouvement d2 est activée.

Le deuxième sous-ensemble PSU1 comprend les éléments de dissipation de puissance, par exemple les transistors MOS de découpage de la tension d'entrée, qui permettent la génération de la tension réduite sur la sortie positive VCC. Cette tension alimente l'unité logique de traitement CPU et l'unité de contrôle de couple. L'entrée de réveil P3 est directement raccordée au deuxième sous-ensemble, et en permet l'activation quand le signal de réveil WK devient actif. Ainsi, bien que l'actionneur soit normalement alimenté en permanence, sa consommation est réduite au strict minimum tant qu'il n'y a pas eu disparition d'au moins une demi-onde positive ou une demi-onde négative.

Il est à noter que les sous-ensembles PSU0 et PSU1 comprennent tous les deux des condensateurs de capacité suffisante pour permettre l'alimentation des circuits électroniques CPU, TCU, CIU au moins lorsque la tension d'alimentation est coupée pendant une demi-période. Alternativement, ce sont les circuits électroniques CPU, TCU, CIU qui présentent ces condensateurs.

L'unité logique de traitement CPU comporte une troisième sortie logique 03 également raccordée à l'entrée de réveil P3 de l'unité d'alimentation. Les sorties WK et P3 sont par exemple de type collecteur ouvert ou drain ouvert. Ainsi, une fois l'unité logique de traitement réveillée, celle-ci peut maintenir son état d'alimentation aussi longtemps que nécessaire.

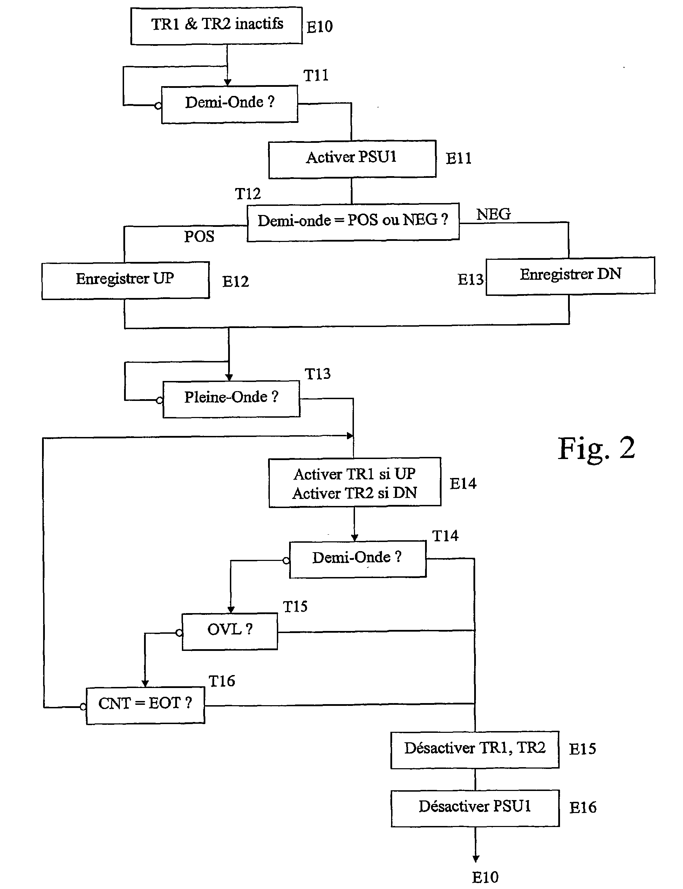

La figure 2 représente, sous forme d'un ordinogramme, un mode d'exécution du procédé de commande de l'actionneur selon l'invention, tel qu'il se déroule dans l'unité de pilotage du moteur MCU.

L'actionneur est supposé être alimenté de façon normale, en pleine onde de tension. L'unité d'alimentation fonctionne à puissance réduite (le sous - ensemble PSU0 est seul activé).

Dans une étape initiale E10, les interrupteurs commandés TR1 et TR2 sont inactifs.

Un premier test T11 détecte si un régime demi-onde apparaît, c'est-à-dire si un signal redressé mono alternance est présent sur le conducteur HL. Si tel est le cas, on passe à la première étape E11, si non, il y a bouclage sur ce premier test T11.

A l'étape E11, il y a activation complète de l'unité d'alimentation PSU (les sous-ensembles PSU0 et PSU1 sont activés). L'unité logique de traitement CPU est activée. Lors du deuxième test T12, il est testé si la demi-onde restante est positive ou négative. Si elle est positive, on passe à une deuxième étape E12 dans laquelle un indicateur UP est positionné. Si elle est négative, on passe à une troisième étape E13 dans laquelle un indicateur DN est positionné. Les sorties des étapes E12 et E13 conduisent à un troisième test T13 sur un retour au régime pleine-onde. Tant que la tension d'alimentation de l'actionneur n'est pas redevenue pleine onde, alors le test T13 boucle sur lui-même.

Si la tension redevient pleine onde, alors on passe à une quatrième étape E14 dans laquelle on active le premier, respectivement le deuxième, interrupteur commandé selon l'indicateur UP, respectivement DN, positionné lors des étapes E12 ou E13. Le moteur est alors alimenté et entraîne la charge dans le premier ou le deuxième sens.

Cette situation d'alimentation du moteur perdure si les trois tests suivants sont négatifs :
- un quatrième test T14 détermine s'il y a retour à un régime demi-onde. Si oui, la disparition d'une alternance est immédiatement interprétée comme un ordre d'arrêt et on passe à une cinquième étape E15. Si non, on passe à un cinquième test T15.
- Le cinquième test T15 détermine s'il y a surcouple (arrivée en butée, détection d'obstacle). Si oui, on passe également à l'étape E15. Si non, on passe à un sixième test T16.
- Le sixième test T16 détermine si le contenu du compteur CNT correspond à une valeur EOT pré-enrgistrée lors d'un apprentissage de fin de course. Si oui, on passe également à l'étape E15, si non, on boucle sur l'étape E14 ou, alternativement, sur l'entrée du test T14.

Lors de la cinquième étape E15, l'interrupteur commandé qui était activé devient désactivé, de manière à provoquer l'arrêt du moteur. Puis on passe à la sixième étape E16 dans laquelle l'unité d'alimentation repasse en puissance réduite par désactivation du deuxième sous-ensemble PSU1. L'unité logique de traitement désactive par exemple sa troisième sortie 03, ce qui provoque la mise en sommeil du deuxième sous-ensemble et la disparition de la tension positive VCC.

Au contenu du compteur CNT près, l'ensemble de l'actionneur se retrouve alors dans la configuration de l'étape initiale E10. Le procédé boucle sur cette étape.

Le procédé est susceptible de nombreuses variantes. En particulier, il peut se révéler utile de confirmer le régime demi-onde pendant trois périodes successives de la tension d'alimentation avant de positionner le premier indicateur UP ou le deuxième indicateur DN. Le test T12 est alors répété trois fois à l'identique avant que ne soit validé un passage aux étapes E12 ou E13.

De même, on peut s'assurer du retour en pleine onde pendant au moins deux périodes complètes lors du test T13 avant d'effectuer un branchement sur l'étape E14. On peut se contenter de s'assurer que le signal issu de l'unité de commande à distance RCU comprend une alternance positive et une alternance négative.

Dans tous les cas, il est caractéristique de l'invention que le régime de pleine-onde doit être rétabli avant d'alimenter le moteur. De plus, il suffit ensuite d'un retour à un régime demi-onde pour provoquer l'arrêt de l'alimentation du moteur, quelle que soit la nature de ce régime demi-onde.

De manière préférée, la disparition d'une seule alternance suffit à provoquer l'ouverture de l'interrupteur commandé. Un appui prolongé sur un interrupteur provoque un signal de commande constitué d'un signal redressé mono alternance, c'est-à-dire une redondance d'ordres d'arrêt lorsque le moteur est alimenté. Ceci permet de sécuriser la fonction d'arrêt de manoeuvre.

Le mode de réalisation de l'unité de pilotage du moteur MCU est également susceptible de variantes. En particulier, l'unité d'interprétation de commande CIU peut être remplacée par une simple unité de réveil WKU, ne présentant que l'entrée d'information d'alternance POS/NEG et une sortie de réveil WK. L'interprétation des commandes est alors totalement effectuée par l'unité logique de traitement CPU dont les entrées I1 et I2 deviennent alors reliées aux capteurs de courant du premier sous-ensemble PSU0.

Dans une variante, l'unité de pilotage du moteur MCU contient une unité d'interprétation de commande CIU susceptible de discriminer également une commande de position intermédiaire IP.

Dans cette variante de l'installation, un condensateur CIP est disposé dans l'unité de commande à distance RCU entre l'entrée raccordée à la connexion de phase et la sortie raccordée à l'actionneur par la liaison de phase HL, donc aux bornes des deux interrupteurs montés en série.

Si une impulsion a lieu sur un des deux interrupteurs normalement fermés, alors l'actionneur est alimenté à travers le condensateur CIP, qui crée donc un montage diviseur de tension avec au moins la résistance d'entrée de l'unité d'alimentation PSU pendant une demi-période.

Dans ce cas, la tension aux bornes de l'actionneur n'est pas nulle mais réduite, par exemple égale au tiers de la valeur nominale.

On continue à assimiler à un signal redressé mono-alternance un signal comportant une demi-période de tension égale à la tension nominale et une demi-période dé tension réduite, ce qui conduit au même fonctionnement que précédemment.

La détection d'une tension réduite lors de demi-période(s) positive(s) ou lors de demi-période(s) négative(s) sera interprétée comme un ordre de mouvement si le moteur est à l'arrêt, et comme un ordre d'arrêt si le moteur est en mouvement.

Par contre, si une pleine onde de tension réduite est détectée, ou si plusieurs périodes pleine onde de tension réduite sont détectées, alors que le moteur est à l'arrêt, ce qui est provoqué par l'appui simultané sur les deux interrupteurs, alors l'unité d'interprétation de commande en déduit qu'il s'agit d'une commande d'aller dans une position intermédiaire prédéfinie.

Si aucune position intermédiaire n'a été mémorisée au préalable, l'unité d'interprétation de commande en déduit qu'il s'agit d'une commande de mémorisation de la position actuelle de l'actionneur comme étant la position intermédiaire prédéfinie.

Enfin, le moteur peut être de type à courant continu, complété par un montage tel que décrit de la ligne 4 page 25 à la ligne 16 page 26 en référence à la figure 12 dans la demande de brevet WO 2004/025867.

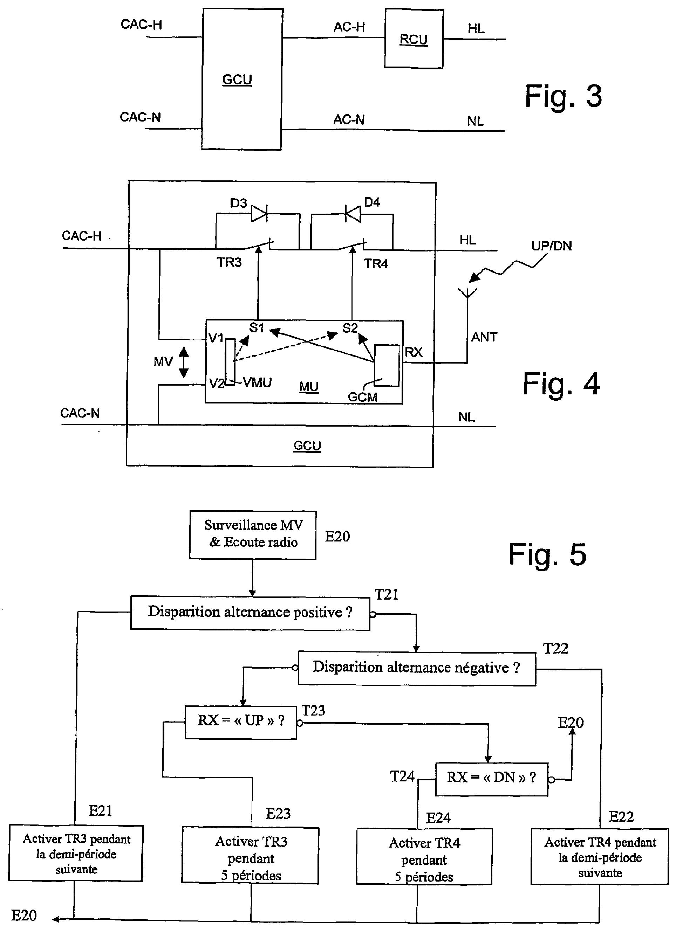

Par rapport à ce document, l'installation selon l'invention présente de plus une sécurité de fonctionnement accrue par l'introduction d'une unité GCU de surveillance et de mise en forme de tension alternative dont le fonctionnement est maintenant décrit en référence aux figures 3 à 7.

La figure 3 représente l'unité de commande à distance RCU de l'installation de la figure 1 et sa liaison avec l'unité GCU de surveillance et de mise en forme de tension alternative. L'actionneur de l'installation n'est pas représenté. Il serait raccordé aux deux lignes électriques référencées HL et NL à droite de la figure, c'est-à-dire en « aval ».

L'unité GCU de surveillance et de mise en forme de tension alternative est de préférence disposée dans le tableau électrique du bâtiment. Elle est alimentée, en « amont », par le réseau électrique commercial dont la ligne de phase est référencée CAC-H, et dont la ligne de neutre est référencée CAC-N, tandis que la ligne de phase et la ligne de neutre circulant dans le bâtiment en sortie de tableau sont simplement référencées AC-H et AC-N.

Comme expliqué dans le document WO 2004/025867, plusieurs unités de commande à distance RCU et plusieurs actionneurs ACT peuvent être commandés par l'unité de surveillance et de mise en forme de tension alternative, lorsque celle-ci présente un module de commande générale GCM.

La figure 4 représente le détail d'une unité GCU de surveillance et de mise en forme de tension alternative munie d'un tel module. L'unité de surveillance comprend une unité MU de mesure de tension et de pilotage d'interrupteurs par ses deux sorties S1 et S2.

Les sorties S1 et S2 sont raccordées aux entrées de commande d'un premier interrupteur commandé à ouverture TR3 et d'un deuxième interrupteur commandé à ouverture TR4, jouant un rôle analogue aux interrupteurs SW1 et SW2 inclus dans l'unité de commande à distance RCU précédemment décrite. Les interrupteurs commandés à ouverture TR3 et TR4 sont de même raccordés en série, et comportent des diodes anti-parallèles D3 et D4 dont les anodes sont raccordées au point commun des interrupteurs commandés à ouverture TR3 et TR4.

Alternativement, un triac remplace les interrupteurs commandés à ouverture et les diodes. Le triac est alors commandé de manière à laisser passer une pleine onde, ou simplement les demi-ondes positives, ou simplement les demi-ondes négatives, de manière strictement équivalente à l'ensemble des interrupteurs commandés à ouverture TR3 et TR4 et des diodes anti-parallèles D3 et D4.

L'unité MU de mesure de tension et de pilotage comprend un module de commande générale GCM constitué par un récepteur d'ondes radioélectriques qui est raccordé à une antenne ANT par une entrée RX Selon que l'ordre reçu par le récepteur d'ondes radioélectriques est un ordre de monté UP ou de descente DN, il y activation de la sortie S1 ou de la sortie S2, comme symbolisé par deux flèches en trait plein, issues du module de commande générale GCM.

L'unité MU de mesure de tension et de pilotage comprend de plus un module VMU de mesure de la tension du réseau. Deux bornes de surveillance de tension notées V1 et V2 sont raccordées à la ligne de phase du réseau commercial CAC-H, et à la ligne de neutre du réseau commercial CAC-N. La tension du réseau commercial MV est ainsi mesurée par le module VMU de mesure de la tension du réseau.

Il est en effet important d'empêcher qu'une coupure accidentelle ou frauduleuse d'une demi-alternance puisse provoquer une manoeuvre non désirée de la charge. Ceci est particulièrement important si la charge LD entraînée par l'actionneur est une porte ou un volet roulant.

A cet effet, le module de surveillance de tension est également raccordé aux sorties S1 et S2, comme symbolisé par deux flèches en trait pointillé.

La figure 5 décrit un mode d'exécution du procédé de surveillance mis en oeuvre dans l'unité GCU de surveillance et de misé en forme de tension alternative. Dans une étape initiale E20 dans laquelle sont activés le module de surveillance de la tension du réseau « amont » et le récepteur d'ondes radioélectriques. On passe alors à un premier test T21 dans lequel on teste s'il y a disparition d'une alternance positive dans la tension délivrée par le réseau commercial. Si oui, on passe à une première étape E21 dans laquelle la sortie S1 est activée sur la demi-période suivant immédiatement l'alternance manquante, ce qui a pour effet d'ouvrir l'interrupteur TR3 et donc de faire disparaître également l'alternance négative. Ainsi, en « aval », le signal transmis ne peut pas être interprété comme un ordre de manoeuvre.

Si le test T21 donne un résultat négatif, on passe à un deuxième test T22 de disparition d'une alternance négative. Si cette fois une alternance négative manque dans la tension « amont », on passe à une deuxième étape E22 qui consiste à activer la sortie S2 pour provoquer l'ouverture de l'interrupteur TR4 pendant toute la demi-période suivant l'alternance manquante. De nouveau, c'est donc automatiquement une période complète de la tension qui disparaît en « aval ». Le système de surveillance maintient la distribution d'une tension de valeur moyenne nulle, en absence d'ordre volontaire et autorisé.

Si le deuxième test T22 donne un résultat négatif, c'est que la tension alternative « amont » est complète. Dès lors, il convient également d'analyser les ordres de commande générale reçus par ondes radioélectriques, et de les transmettre par voie filaire. On passe alors à un troisième test T23 au cours duquel il est testé si le récepteur a reçu un ordre de montée UP. Si oui, on passe à une troisième étape E23 dans laquelle on active la sortie S1 pendant 5 périodes, ce qui provoque l'ouverture de l'interrupteur TR3 et la transmission des seules demi-ondes positives pendant cette durée. En « aval », cet ordre est interprété comme un ordre de manoeuvre de montée et provoque une alimentation du ou des moteurs dans le sens correspondant, dès le retour à une alimentation pleine-onde.

Si le récepteur d'ondes radioélectriques n'a pas reçu un ordre d'ouverture, on passe à un quatrième test T24 déterminant s'il a reçu un ordre de manoeuvre de descente DN. Si oui, on passe à une quatrième étape E24 dans laquelle on active la sortie S2 pendant 5 périodes, ce qui provoque l'ouverture de l'interrupteur TR4 et la transmission des seules demi-ondes négatives pendant cette durée. En « aval », cet ordre est interprété comme un ordre de manoeuvre de descente DN et provoque une alimentation du ou des moteurs dans le sens correspondant, dès le retour à une alimentation pleine-onde.

A l'issue de chacune des quatre étapes du procédé, celui-ci boucle sur l'étape initiale E20.

Un avantage important de l'invention est qu'elle permet de transmettre un signal de programmation, par exemple pour le passage dans un mode de réglage et/ou d'apprentissage de positions particulières.

Ainsi, une durée calibrée d'un signal mono-alternance est interprétée comme un signal de mémorisation d'une fin de course supérieure si le signal est de polarité positive, et comme un signal de mémorisation d'une fin de course inférieure si le signal est de polarité négative. Une durée calibrée est par exemple comprise entre 15 et 20 secondes.

En référence à la figure 2, un test supplémentaire peut être inséré à la sortie positive du test T13, avant l'étape E14. Ce test vérifie si la valeur courante d'un compteur de temps est compris entre 15 secondes et 20 secondes. Si tel n'est pas le cas, le procédé continue par l'étape E14. Si tel est le cas, il y a passage dans un mode d'apprentissage et lecture de la valeur de position courante de la charge, contenue dans le compteur CNT. La valeur de ce compteur est affectée à une mémoire de fin de course haute si l'indicateur UP a été activé à l'étape E12, et il est affecté à une mémoire de fin de course basse si l'indicateur DN a été activé à l'étape E13.

Le compteur de temps TIM est remis à zéro après l'affectation de sa valeur à une mémoire. Ce compteur est activé lors de l'étape E11.

Par mesure de sécurité, l'ergonomie de mémorisation et/ou de passage dans un mode de réglage peut être rendue plus complexe et nécessiter plusieurs actions successives de durée calibrée.

## Revendications

1. Procédé de commande d'un actionneur électromécanique (ACT) comprenant un moteur (MOT) de manoeuvre d'un équipement mobile (LD) d'un bâtiment dans un premier sens (DIR1) et dans un deuxième sens (DIR2) par l'intermédiaire d'une unité (RCU) de commande à distance et d'une unité (MCU) de pilotage du moteur placées respectivement l'une en amont de l'autre sur une ligne d'alimentation électrique du moteur par une tension alternative, un ordre de manoeuvre dans le premier sens comprenant un signal redressé mono-alternance de polarité positive et un ordre de manoeuvre dans le deuxième sens comprenant un signal redressé mono-alternance de polarité négative, **caractérisé en ce qu'**un ordre d'arrêt comprend un signal redressé mono-alternance de polarité quelconque.

2. Procédé de commande selon la revendication 1, **caractérisé en ce que** les ordres de manoeuvre comprennent un signal redressé mono-alternance dans lequel au moins cinq alternances de même signe de la tension alternative ont été coupées.

3. Procédé de commande selon la revendication 1 ou 2, **caractérisé en ce que** les ordres de manoeuvre comprennent en outre un signal de tension alternative suivant le signal redressé mono-alternance.

4. Procédé de commande selon l'une des revendications précédentes, **caractérisé en ce que** des circuits électroniques (PSU1, CPU, TCU) de gestion de l'alimentation du moteur sont activés dès qu'un signal redressé mono-alternance est détecté.

5. Procédé de commande selon la revendication précédente, **caractérisé en ce que** les circuits électroniques (PSU1, CPU, TCU) de gestion de l'alimentation du moteur sont désactivés dès qu'une commande d'arrêt est exécutée.

6. Procédé de commande selon l'une des revendications précédentes, **caractérisé en ce qu'**un signal redressé mono-alternance comporte une demi-période de tension égale à la tension nominale et une demi-période de tension réduite.

7. Procédé de commande selon la revendication précédente, **caractérisé en ce qu'**une période complète, ou une succession de périodes complètes, de tension réduite est interprétée comme un ordre de manoeuvre de l'équipement mobile (LD) vers une position intermédiaire prédéfinie si le moteur est à l'arrêt.

8. Procédé de commande selon l'une des revendications précédentes, **caractérisé en ce qu'**on surveille la présence des alternances de la tension alternative et **en ce que**, lorsqu'une première alternance est absente, on supprime l'alternance suivant immédiatement la première alternance de sorte que la première alternance absente ne puisse pas être interprétée comme un ordre de manoeuvre.

9. Actionneur (ACT) de manoeuvre d'un équipement mobile (LD) d'un bâtiment dans un premier sens (DIR1) et dans un deuxième sens (DIR2), comprenant une unité (MCU) de pilotage d'un moteur et un moteur (MOT), **caractérisé en ce qu'**il comprend des moyens matériels (PSU0, CIU, TCU) et logiciels mettant en oeuvre le procédé selon l'une des revendications 1 à 8.

10. Installation (INST) comprenant un actionneur (ACT) selon la revendication 9 et une unité (RCU) de commande à distance comprenant deux interrupteurs normalement fermés (SW1, SW2) montés en série et deux diodes (D1, D2) montées en parallèle des interrupteurs, deux électrodes de même nature des diodes étant reliées à la borne commune des interrupteurs.

11. Installation selon la revendication précédente, **caractérisée en ce que** l'unité (RCU) de commande à distance comprend un condensateur (CIP) disposé aux bornes de l'ensemble des deux interrupteurs montés en série.

12. Installation (INST) selon la revendication 10, **caractérisée en ce qu'**elle comprend une unité (GCU) de surveillance de tension et de mise en forme de tension pour surveiller la présence des alternances d'une tension alternative et, lorsqu'une première alternance est absente, pour supprimer l'alternance suivant immédiatement la première alternance.

13. Installation selon la revendication 12, **caractérisée en ce que** l'unité (GCU) de surveillance de tension et de mise en forme de tension comprend un module de mesure de tension (VMU), deux interrupteurs commandés normalement fermés (TR3, TR4) montés en série et deux diodes (D3, D4) montées en parallèle des interrupteurs, deux électrodes de même nature des diodes étant reliées à la borne commune des interrupteurs et une unité (MU) pour commander les interrupteurs en fonction de la tension mesurée par le module de mesure de tension.

14. Installation selon la revendication précédente, **caractérisée en ce que** l'installation comprend, en aval de l'unité de surveillance, au moins l'actionneur électromécanique (ACT), l'unité (RCU) de commande à distance et une unité (MCU) de pilotage du moteur placées respectivement l'une en amont de l'autre sur une ligne d'alimentation électrique du moteur par une tension alternative, un ordre de manoeuvre dans le premier sens comprenant un signal redressé mono-alternance de polarité positive et un ordre de manoeuvre dans le deuxième sens comprenant un signal redressé mono-alternance de polarité négative.

## Claims

1. A method of controlling an electromechanical actuator (ACT) comprising a motor (MOT) for maneuvering a mobile appliance (LD) of a building in a first direction (DIR1) and in a second direction (DIR2) by way of a remote-control unit (RCU) and a unit (MCU) for driving the motor that are placed respectively one upstream of the other on an electrical power line energizing the motor with an alternating voltage, a command to maneuver in the first direction comprising a half-wave rectified signal of positive polarity and a command to maneuver in the second direction comprising a half-wave rectified signal of negative polarity, **characterized in that** a stop command comprises a half-wave rectified signal, whatever the polarity of the signal is.

2. The control method as claimed in claim 1, **characterized in that** the maneuver commands comprise a half-wave rectified signal in which at least five alternations of like sign of the alternating voltage have been cut off.

3. The control method as claimed in claim 1 or 2, **characterized in that** the maneuver commands furthermore comprise an alternating voltage signal following the half-wave rectified signal.

4. The control method as claimed in one of the preceding claims, **characterized in that** electronic circuits (PSU1, CPU, TCU) for managing the power supply to the motor are activated as soon as a half-wave rectified signal is detected.

5. The control method as claimed in the preceding claim, **characterized in that** the electronic circuits (PSU1, CPU, TCU) for managing the power supply to the motor are deactivated as soon as a stop order is executed.

6. The control method as claimed in one of the preceding claims, **characterized in that** a half-wave rectified signal comprises a voltage half-period equal to the nominal voltage and a reduced voltage half-period.

7. The control method as claimed in the preceding claim, **characterized in that** a complete period, or a succession of complete periods, of reduced voltage is interpreted as a command to maneuver the mobile appliance (LD) towards a predefined intermediate position if the motor has stopped.

8. The control method as claimed in one of the preceding claims, **characterized in that** the presence of the alternations of the alternating voltage is monitored and **in that**, when a first alternation is absent, the alternation immediately following the first alternation is removed such that the first missing alternation cannot be interpreted as a command to maneuver.

9. An actuator (ACT) for maneuvering a mobile appliance (LD) of a building in a first direction (DIR1) and in a second direction (DIR2), comprising a unit (MCU) for driving a motor and a motor (MOT), **characterized in that** it comprises hardware means (PSU0, CIU, TCU) and software for implementing the method according to one of claims 1 to 8.

10. An installation (INST) comprising an actuator (ACT) as claimed in claim 9 and a remote-control unit (RCU) comprising two normally closed switches (SW1, SW2) mounted in series and two diodes (D1, D2) mounted in parallel with the switches, two electrodes of like nature of the diodes being linked to the common terminal of the switches.

11. The installation as claimed in the preceding claim, **characterized in that** the remote-control unit (RCU) comprises a capacitor (CIP) disposed across the terminals of the assembly of the two switches mounted in series.

12. The installation (INST) as claimed in claim 10, **characterized in that** it comprises a voltage monitoring and voltage shaping unit (GCU) to monitor the presence of the alternations of an alternating voltage and, when a first alternation is absent, to remove the alternation immediately following the first alternation.

13. The installation as claimed in claim 12, **characterized in that** the voltage monitoring and voltage shaping unit (GCU) comprises a voltage measurement module (VMU), two normally closed controlled switches (TR3, TR4) mounted in series and two diodes (D3, D4) mounted in parallel with the switches, two electrodes of like nature of the diodes being linked to the common terminal of the switches and a unit (MU) to control the switches as a function of the voltage measured by the voltage measurement module.

14. The installation as claimed in the preceding claim, **characterized in that** the installation comprises, downstream of the monitoring unit, at least the electromechanical actuator (ACT), the remote-control unit (RCU) and a unit (MCU) for driving the motor that are placed respectively one upstream of the other on an electrical power line energizing the motor with an alternating voltage, a command to maneuver in the first direction comprising a half-wave rectified signal of positive polarity and a command to maneuver in the second direction comprising a half-wave rectified signal of negative polarity.

## Patentansprüche

1. Steuerungsverfahren für ein elektromechanisches Stellglied (ACT), das einen Motor (MOT) zum Manövrieren einer beweglichen Apparatur (LD) eines Gebäudes in eine erste Richtung (DIR1) und in eine zweite Richtung (DIR2) mittels einer Fernsteuerungseinheit (RCU) und einer Einheit (MCU) zur Ansteuerung des Motors, die jeweils eine der anderen vorgeschaltet auf einer Leitung für die Stromzufuhr des Motors durch eine Wechselspannung angeordnet sind, umfasst, wobei ein Manövrierbefehl in die erste Richtung ein halbwellengleichgerichtetes Signal mit positiver Polarität umfasst und ein Manövrierbefehl in die zweite Richtung ein halbwellengleichgerichtetes Signal mit negativer Polarität umfasst, **dadurch gekennzeichnet, dass** ein Stoppbefehl ein halbwellengleichgerichtetes Signal mit einer beliebigen Polarität umfasst.

2. Steuerungsverfahren nach Anspruch 1, **dadurch gekennzeichnet, dass** die Manövrierbefehle ein halbwellengleichgerichtetes Signal umfassen, in dem mindestens fünf Halbwellen desselben Zeichens der Wechselspannung abgeschnitten wurden.

3. Steuerungsverfahren nach Anspruch 1 oder 2, **dadurch gekennzeichnet, dass** die Manövrierbefehle außerdem ein Wechselspannungssignal umfassen, das auf das halbwellengleichgerichtete Signal folgt.

4. Steuerungsverfahren nach einem der vorhergehenden Ansprüche, **dadurch gekennzeichnet, dass** die elektronischen Schaltkreise (PSU1, CPU, TCU) zur Steuerung der Stromzufuhr des Motors aktiviert werden, sobald ein halbwellengleichgerichtetes Signal erfasst wird.

5. Steuerungsverfahren nach dem vorhergehenden Anspruch, **dadurch gekennzeichnet, dass** die elektronischen Schaltkreise (PSU1, CPU, TCU) zur Steuerung der Stromzufuhr des Motors deaktiviert werden, sobald ein Stoppbefehl ausgeführt wird.

6. Steuerungsverfahren nach einem der vorhergehenden Ansprüche, **dadurch gekennzeichnet, dass** ein halbwellengleichgerichtetes Signal eine Halbperiode mit einer Spannung, die der Nennspannung gleich ist, und eine Halbperiode mit einer verringerten Spannung umfasst.

7. Steuerungsverfahren nach dem vorhergehenden Anspruch, **dadurch gekennzeichnet, dass** eine Vollperiode oder eine Folge von Vollperioden mit einer verringerten Spannung als ein Manövrierbefehl der beweglichen Apparatur (LD) in Richtung einer vordefinierten Zwischenstellung ausgelegt wird, wenn der Motor gestoppt wurde.

8. Steuerungsverfahren nach einem der vorhergehenden Ansprüche, **dadurch gekennzeichnet, dass** die Anwesenheit von Halbwellen der Wechselspannung überwacht wird und dass, wenn eine erste Halbwelle abwesend ist, die direkt auf die erste Halbwelle folgende Halbwelle derart unterdrückt wird, dass die abwesende erste Halbwelle nicht als ein Manövrierbefehl ausgelegt werden kann.

9. Stellglied (ACT) zum Manövrieren einer beweglichen Apparatur (LD) eines Gebäudes in eine erste Richtung (DIR1) und in eine zweite Richtung (DIR2), das eine Einheit (MCU) zur Ansteuerung eines Motors und einen Motor (MOT) umfasst, **dadurch gekennzeichnet, dass** es Hardwaremittel (PSU0, CIU, TCU) und Softwaremittel zur Durchführung des Verfahrens nach einem der Ansprüche 1 bis 8 umfasst.

10. Anlage (INST), die ein Stellglied (ACT) nach Anspruch 9 und eine Fernsteuerungseinheit (RCU) umfasst, die zwei in Reihe geschaltete, normalerweise geschlossene Schalter (SW1, SW2) und zwei zu den Schaltern parallel geschaltete Dioden (D1, D2) umfasst, wobei zwei Elektroden von derselben Art wie die Dioden mit der gemeinsamen Klemme der Schalter verbunden sind.

11. Anlage nach dem vorhergehenden Anspruch, **dadurch gekennzeichnet, dass** die Fernsteuerungseinheit (RCU) einen Kondensator (CIP) umfasst, der an den Klemmen der Einheit der zwei in Reihe geschalteten Schalter angeordnet ist.

12. Anlage (INST) nach Anspruch 10, **dadurch gekennzeichnet, dass** sie eine Spannungsüberwachungsund Spannungsformungseinheit (GCU) umfasst, um auf die Anwesenheit von Halbwellen einer Wechselspannung zu überwachen und, wenn eine erste Halbwelle abwesend ist, die direkt auf die erste Halbwelle folgende Halbwelle zu unterdrücken.

13. Anlage nach Anspruch 12, **dadurch gekennzeichnet, dass** die Spannungsüberwachungs- und Spannungsformungseinheit (GCU) ein Spannungsmessmodul (VMU), zwei in Reihe geschaltete, normalerweise geschlossene gesteuerte Schalter (TR3, TR4) und zwei zu den Schaltern parallel geschaltete Dioden (D3, D4), wobei zwei Elektroden von derselben Art wie die Dioden mit der gemeinsamen Klemme der Schalter verbunden sind, und eine Einheit (MU) zum Steuern der Schalter in Abhängigkeit von der durch das Spannungsmessmodul gemessenen Spannung umfasst.

14. Anlage nach dem vorhergehenden Anspruch, **dadurch gekennzeichnet, dass** die Anlage, der Überwachungseinheit nachgeschaltet, mindestens ein elektromechanisches Stellglied (ACT), die Fernsteuerungseinheit (RCU) und eine Einheit (MCU) zur Ansteuerung des Motors umfasst, die jeweils eine der anderen vorgeschaltet auf einer Leitung für die Stromzufuhr des Motors durch eine Wechselspannung angeordnet sind, wobei ein Manövrierbefehl in die erste Richtung ein halbwellengleichgerichtetes Signal mit positiver Polarität umfasst und ein Manövrierbefehl in die zweite Richtung ein halbwellengleichgerichtetes Signal mit negativer Polarität umfasst.
